# EUROPEAN PATENT APPLICATION

(11) **EP 1 640 651 A2**
(43) Date of publication of application: **29.03.2006**
(21) Application number: 05108695.7
(22) Date of filing: 21.09.2005
(51) Int. Cl.: F16L 41/03

(54) **Configurable modular line for feeding utilities and supporting structures**

(30) Priority: 22.09.2004 IT TO20040637
(71) Applicant: SICOMAT DI DENEGRI CARLO & C. S.A.S., 12084 Mondovi' (IT)
(72) Inventor: Denegri, Carlo, 12084, MONDOVI' (IT)
(74) Representative: Jorio, Paolo

(57) **Abstract**

A configurable modular line (1) for feeding utilities and supporting fixtures has a main section bar (3) made of aluminium, defining a first longitudinal conveying duct (6) of pressurised air and at least one second longitudinal conveying duct (7,19,20) of a fluid, and provided with a plurality of peripheral attachment devices (31) for connecting fixtures.

## Description

The present invention relates to a configurable modular line for feeding utilities and supporting fixtures.

For feeding utilities, such as for example electrical power and/or pressurised fluids, in an operative system it is known to make distinct and dedicated lines which are, on a case-by-case basis, designed according to the arrangement of the work stations, of the machines and/or of the fixtures used in the work stations as well as according to the arrangement of the machines in the work stations themselves. For the fixtures, instead, the supports, the runways, the most appropriate motor drives, etc. are defined. According to the specific needs there are consequently established the connection or attachment points to the various feeding lines which, inevitably, become so much more complex and bulky, and consequently costly, as more complex and crowded are the work stations.

For the reasons above, modifications to the known systems described above are particularly difficult, in some cases impossible, and when possible require long intervention times and not at all negligible costs, to the extent that often for economic reasons existing systems are entirely removed and rebuilt, again in a dedicated form.

Finally, as far as specifically concerns the utilities feeding lines, the known lines, on one hand do not usually include return lines for the discharged compressed air and, on the other hand, are not capable of feeding different fluids at different pressures without using reducer devices also here dedicated to the single machine or to the specific fixture with understandably high costs.

It is the object of the present invention to provide a configurable modular line for feeding utilities and supporting fixtures, which allows to extremely simply and cost-effectively solve the above problems.

According to the present invention it is provided a configurable modular line for feeding utilities and supporting fixtures, characterised in that it comprises a main section bar made of aluminium, defining a first longitudinal conveying duct of a fluid and at least one second longitudinal duct, and including peripheral connection means for the connection of reciprocally different fixtures/accessories selectable from a set of auxiliary elements; said set of auxiliary elements comprising an auxiliary aluminium guiding section bar adapted to guide a carriage, and at least one lateral inlet/outlet pipe fitting of the fluid; said peripheral connection means including first longitudinal seats for fastening said auxiliary aluminium guiding section bar, and second longitudinal seats for the coupling of said pipe fitting.

The invention will now be described with reference to the accompanying drawings illustrating a non-limitative exemplary embodiment, in which:
- figure 1 is a partially sectional lateral view with parts removed for clarity of a preferred embodiment of a configurable modular line for feeding utilities and supporting fixtures made according to the dictates of the present invention;
- figure 2 shows, on magnified scale with parts in section, a detail of the configurable modular line in figure 1; and
- figures 3 and 4 show two different components of the modular line carried by the detail in figure 2.

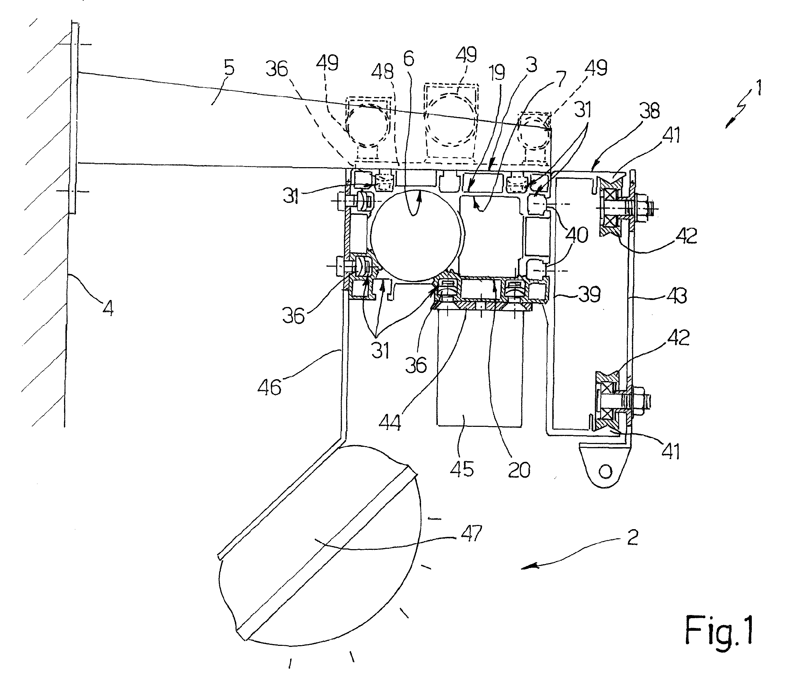

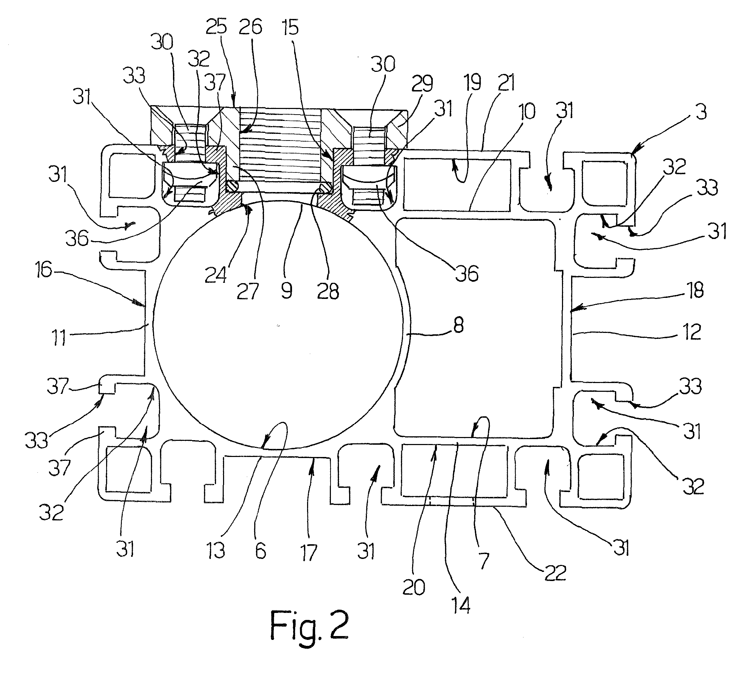

In figure 1, it is indicated with 1 a configurable modular line for feeding utilities and supporting fixtures. In the specifically described example, the line 1 is an overhead line connected to a wall 4 via a plurality of supporting arms 5; alternatively, the line may be envisaged on floor level or in different raised positions with respect to the same for distributing or conveying towards a plurality of stations 2 (only one of which is shown in figure 2) different fluids at different pressures, electrical power, control and/or signal transmission wirings or cables and simultaneously supporting fixtures or various actuator devices as well as illumination and/or signalling devices, as explained more in detail below.

Specifically, the line 1 comprises one or more main or reference longitudinal section bars 3 of equal or different length, each of which is made of aluminium, has a constant transversal section and an essentially rectangular external profile. Each section bar 3 is linked at its end to an adjacent fluidtight section bar 3 in a conventional way and not described in detail, and the terminal section bars are tightly closed by closing elements again of the conventional type, not shown.

Each section bar 3 defines a first longitudinal pressurised air feeding duct 6 and a second longitudinal air exhaust or return duct 7 from the various work stations 2, machines and/or fixtures. The transversal sections of the ducts 6 and 7 are circular and, respectively, essentially rectangular and have passage sections of the same order of size.

With reference to figure 2, ducts 6, 7 are parallel, reciprocally separated by a wall 8 and delimitated outwardly, upperly by respective walls 9,10, laterally by respective reciprocally opposite walls 11,12, and lowerly by respective walls 13,14.

The walls 9, 11, 13, 12 define the bottom of respective longitudinal, outwardly open U-shaped seats 15, 16, 17, 18, while the walls 10 and 14 separate the duct 7 from respective rectangular section ducts 19, 20, which are delimitated, outwardly, by an upper wall 21 and, respectively, by a lower wall 22 of the main section bar, and are used to feed compressed air at different pressures from that of the duct 6, or to define a vacuum duct or still ducts for feeding other fluids, such as oxygen or other gases, or still to define hermetic ducts, for example for wirings.

The walls 9, 10, 11, 12, 13, 14, 21, 22 have a thickness so to be easily drillable to obtain a plurality of lateral inlet/outlet communication passages of the respective ducts 6, 7, 19, 20 with the outside. The longitudinal and relative position of the passages is chosen according to the needs of the single segment of the line by directly drilling on site the section bar 3 or by pre-drilling it and then closing the passages eventually not used.

Figure 2 shows, by way of example, one of the mentioned lateral outlet passages, which is indicated by 24 and made in the wall 9, and one of the pipe fittings, which is indicated by 25 instead. The pipe fitting 25 has a treaded hole 26, in which is fastened a threaded terminal section of a pipe of known derivation and not shown. The pipe fitting 25 comprises a centring collar 27 engaging the seat 15 and coupled to the wall 9 by interposition of a gasket 28, and releasably connected to the section bar 3 by means of an external flange 29 and a plurality of screws 30. The screws 30 cross the flange and protrude from the respective longitudinal C-shaped seats 31, which are made on the section bar 3 on parts opposite the seat 15 and comprise respective bottom channels 32 outwardly open through respective slots 33 of shorter length than that of the channels 32. The screws 30 are extended through the slots 33 and are screwed in respective nuts 36 housed in the channels 32 in angularly fixed position.

Again with reference to figure 2, the section bar 3 comprises a plurality of such longitudinal retention seats 31, which are obtained on all sides of the section bar 3 on opposite sides of the seats 15, 16, 17, 18 and on opposite sides of the walls 21, 22, at an equal distance or pitch on all faces, are reciprocally dimensionally and geometrically equal, and extend continuously for the entire length of the section bar 3. The longitudinal seats 31 constitute part of respective attachment devices which allow the connection, not only of the arms 5, of the pipe fittings and of the closing elements, but also the connection of one or more fixtures and of one or more accessories and/or auxiliary elements selectable from a set of fixtures and auxiliary/accessory elements all configured so as to be fastened to the grooves 31 stably and releasably by means of simple nut and screw assemblies.

Specifically, as shown in figure 1, the set of auxiliary elements comprises a C-shaped section bar 38, which comprises, in turn, an intermediate attachment wall 39 provided with two protrusions 40 engaging respective slots 33, and two terminal portions 41 defining respective longitudinal tracks facing each other, on which slide the wheels 42 of a carriage 43 supporting a fixture, motorised or not, for example a clamping and/or retaining fixture, a drilling and/or welding fixture. The fluid discharged from the mentioned fixture is sent directly into the duct 7 by simply drilling the wall 39 and the wall 12.

According to variants not shown, the section bars 3 and 38 are arranged in relatively different positions. According to a first of such variants the section bar 3 is turned by 90° whereby the ducts 6 and 7 are arranged both adjacent to the wall 39. In such position, it is possible to drill the walls 13 and/or 14 and 22 and to directly access the ducts inside the C-shaped section bar 38 without needing external pipes which are often bulky and which can be sheared in some applications. Similarly, it is possible to access the ducts 19 and 20 and electrically power the fixtures if the ducts 19 or 20 are crossed by electrical wirings.

According to a different variant, the section bar 3 is turned by 180° whereby the duct 6 is adjacent to the wall 39 and the attachment to the duct 6 can be made through the walls 39 and 11 without needing external pipes.

Still with reference to figure 1, the set of auxiliary elements also comprises an attachment plate 44 of a longitudinal attachment bar or wiring 45 of an electrical power supply (schematically shown), and a bracket 46 carrying a roof lamp 47 for lighting. The set of auxiliary elements also comprises an attachment plate 48 of a support for one or more fluid conveying tubes 49 (broken line). Alternatively, the plate 48 is an attachment plate of an extruded aluminium body defining a set of channels for the tubes 49. In the latter case, the channels can be alternatively used to guide electrical or signal lines when these must be provided in a hermetic environment.

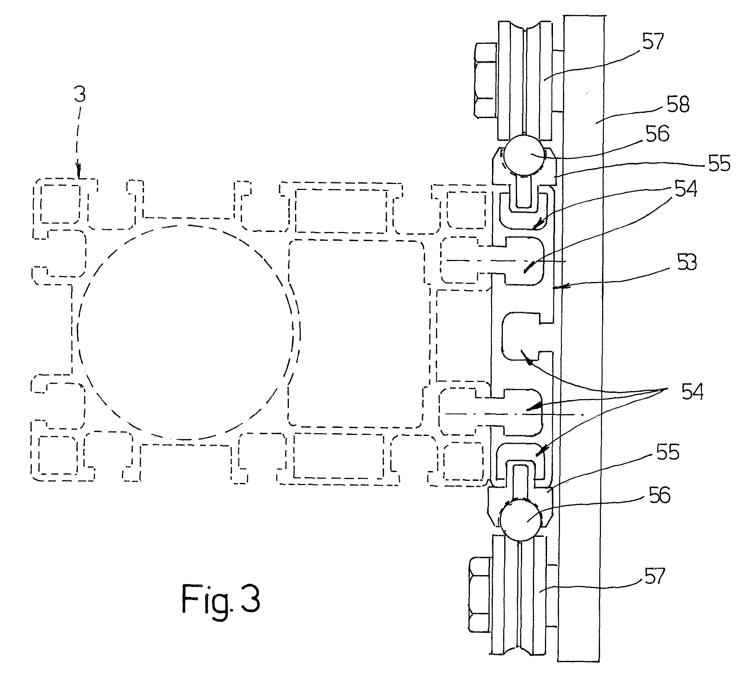

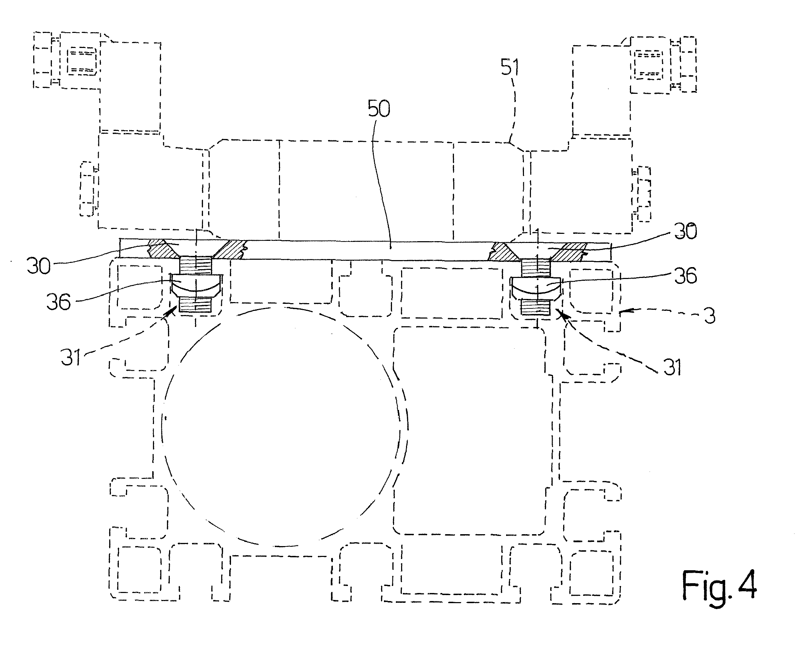

With reference to figure 4, alternatively to plate 48 an interface plate 50 is connected for a solenoid valve block 51 for distributing pressurised fluids between the ducts 6, 7, 19, 20. In this case, it is provided a hollow connection body of the duct 20 which extends through the duct 7. With reference to figure 3 instead, an auxiliary guiding section bar 53 is connected to the main section bar 3 and is provided with a plurality of grooves or seats 54 identical to the seats 31. The end seats 54 of the section bar 53 are engaged by respective clamp shaped section bars 55, which withhold respective longitudinal steel guiding tracks 56, on which slide the wheels 57 of a carriage 58 for supporting specific fixtures, such as for example grippers, welding units, drilling heads, etc.

In use, after possibly cutting to size the section bars 3 these are assembled together forming the line 1. Parallelly, there are made the lateral inlet/outlet passages at the work stations 2. At the same time, the accessories are selected and fitted on the section bar 3 in each work station 2 according to the specific needs thus completing the line 1.

When for different reasons, the envisaged line 1 needs to be modified, the accessories and/or the possible auxiliary section bars can be easily removed from the section bar 3 and possibly replaced or shifted along the section bars 3, as it is possible to change the position of the lateral inlet/outlet passages, thus allowing to set up a new working station and/or to shift existing work stations along the line. At the same time, the lateral inlet/outlet passages which are not used can be easily closed.

From the above, it is apparent that the line 1 has a high degree of flexibility and functionality and allows, at the same time, to perform the dual function of feeding utilities and supporting fixtures/accessories. Indeed, the particular geometry of the section bar 3 allows to connect a plurality of any fixtures/accessories along the external edge of the section bar 3 itself, in moveable and/or longitudinally adjustable manner. In itself, the envisaged section bar 3 then defines at least one second duct 7, 19, 20 in addition to the duct 6, for discharging the compressed air and/or to have a further feeding of fluids at a different pressure, without needing pressure reducers and/or vents in the work stations 2. Then, the same section bar 3 also defines a set of hermetic ducts, for example for electrical wirings.

The line 1 is then extremely simple, because the section bars 3 and 53 always use the same connection method with grooves, screws and nuts. Thanks to such connection method, the line 1 is extremely flexible, because it is possible to connect the accessories in any point along the section bar 3, on any face of the section bar 3 and in any one of the available grooves. Via the line 1 it is possible to feed in a point any fluid at any pressure, to provide vacuum ducts, to supply electrical power and/or control signals and to support accessory members such as lamps or acoustic or light indicators, especially without the need to know in advance the actual arrangement of the work stations, of the machine and/or of the respective fixtures, and still less the typology of machine or fixture used. In the same way, it is evident that line 1 allows to vary particularly rapidly the original position of one or more stations/machines/fixtures and/or to make new ones, because the lateral inlet/outlet passages can be made at any point along the section bar 3 and, if necessary, can be easily and rapidly closed.

From the above, it is again apparent that the line 1 allows to perform a series of functions by considerably reducing, at the same time, with respect to the known construction methods, the construction dimensions and costs.

Finally, from the above, it is apparent that modifications and variations can be applied to the described line 1 without departing from the scope of protection of the present invention.

In particular, the line 1 may have curves and/or the section bar 3 may be supported in a different manner with respect to the arms 4, for example on the upper end of uprights.

The aluminium section bars may be of different shape than shown by the way of example and/or carry different accessories, such as for example actuators and/or small sized lifting assemblies. The grooves 31 may be replaced by different attachment devices, for example by T- or L-shaped portions and/or the tracks 56 may by carried directly by the section bar 3. The inlet/outlet passages of the ducts 6,7,19,20 may be obtained at source and not during installation, possibly at constant pitch and/or with closing/opening elements for using only the necessary passages.

Finally, the aluminium section bars may be integral with the section bar 3 to form an aluminium body made of a single part. Finally, the ducts 7,19,20 may be used to convey fluids other than compressed air or to form ducts housing wirings of different nature.

## Claims

1. A configurable modular line (1) for feeding utilities and supporting fixtures, **characterised in that** it comprises a main section bar (3) made of aluminium, defining a first longitudinal conveying duct (6) of a fluid and at least one second longitudinal duct (7, 19, 20), and including peripheral connection means (31) for the connection of reciprocally different fixtures/accessories selectable from a set of auxiliary elements; said set of auxiliary elements comprising an auxiliary aluminium guiding section bar (38, 53) adapted to guide a carriage (43, 58), and at least one lateral inlet/outlet pipe fitting (25) of the fluid; said peripheral connection means (31, 15-18) including first longitudinal seats (31) for fastening said auxiliary aluminium guiding section bar (38, 53), and second longitudinal seats (31, 15-18) for the coupling of said pipe fitting (25).

2. A modular line according to claim 1, **characterised in that** said second longitudinal seats (31, 15-18) comprise at least one longitudinal housing (15-18) engageable by a portion (27) of said pipe fitting (25).

3. A modular line according to claim 2, **characterised in that** part of said second longitudinal seats (31) are equal to said first longitudinal seats for fastening said pipe fitting (25).

4. A modular line according to claim 3, **characterised in that** said longitudinal housing (15-18) is obtained in intermediate position between two first longitudinal seats (31).

5. A modular line according to any of the preceding claims, **characterised in that** said peripheral connection means (15-18, 31) extend continuously for the entire length of said main section bar (3).

6. A modular line according to any one of the preceding claims, **characterised in that** said first duct (6) is a feeding duct of compressed air and **in that** said second duct (7) is a collection duct of the compressed air discharged from said fixtures/accessories.

7. A modular line according to any of the claims from 1 to 5, **characterised in that** said first duct (6) is a feeding duct of compressed air, and **in that** said second duct (19, 20) is a further duct feeding a fluid at a pressure different from that of said first duct (6).

8. A modular line according to any of the preceding claims, **characterised by** comprising at least one third hermetic duct (19) (20) .

9. A modular line according to claim 8, **characterised in that** said third hermetic duct is defined by said main section bar.

10. A modular line according to any of the preceding claims, **characterised in that** said ducts (6, 7, 19, 20) are defined by respective lateral walls (9, 10, 11, 12, 13, 14, 21, 22) breakable and/or drillable to obtain at least one inlet/outlet lateral passage (24) in any longitudinal position.

11. A modular line according to claim 10, **characterised in that** said lateral walls (9) are defined by bottom walls of said second longitudinal seats (15-18) .

12. A modular line according to any of the preceding claims, **characterised by** comprising a plurality of lateral inlet/outlet passages (24) to/from said ducts (6, 7, 19, 20); at least some of said lateral inlet/outlet passages (24) being associated to respective pipe fittings (25) coupled to said second longitudinal seats (31, 15-18).

13. A modular line according to claim 12, **characterised in that** it comprises for part of said lateral inlet/outlet passages (24), respective fluidtight closing elements coupled to said main section bar (3).

14. A modular line according to any one of the preceding claims, **characterised in that** the set of auxiliary elements comprises a carriage (43, 58) longitudinally sliding on said auxiliary aluminium guiding section bar (38, 53).

15. A modular line according to any of the preceding claims, **characterised in that** the set of auxiliary elements comprises an aluminium auxiliary section bar (53) including connection means (54) identical to those of said main section bar (3).

16. A modular line according to any of the preceding claims, **characterised in that** the set of auxiliary elements comprises a supporting element (50) of a feeding, control and discharging assembly (51) of the fluid to and from said ducts (6, 7, 19, 20).

17. A modular line according to any of the preceding claims, **characterised in that** the set of auxiliary elements comprises a supporting element (48) of tubes (49) for conveying fluids.

18. A modular line according to any of the preceding claims, **characterised in that** the set of auxiliary elements comprises a supporting element (44) of an electrical power feeding or command and control signal transmission wiring (45).

19. A modular line according to any of the preceding claims, **characterised in that** the set of auxiliary elements comprises a supporting element (46) of a lighting member (47).

20. A modular line according to any of the preceding claims, **characterised in that** said first longitudinal seats (31) are dimensionally and geometrically reciprocally equal and reciprocally distanced at a constant pitch around said main profile (3).

21. A modular line according to any one of the preceding claims, **characterised in that** it comprises at least one section bar (38) (53) integrally connected to said main section bar (3) to define with the main section bar (3) a body made of a single part.
